# EUROPEAN PATENT APPLICATION

(11) **EP 3 120 931 A1**
(43) Date of publication of application: **25.01.2017**
(21) Application number: 15764571.4
(22) Date of filing: 20.03.2015
(51) Int. Cl.: B01L 3/02

(54) **FULL-AUTOMATIC PIPETTING STATION AND APPLICATION THEREOF**

(30) Priority: 21.03.2014 CN 201410109314
(71) Applicant: Degree Of Freedom Scientific Machine Co., Ltd., Beijing 100176 (CN)
(72) Inventor: LIU, Dan, Beijing 100176 (CN); ZHAO, Haifeng, Beijing 100176 (CN)
(74) Representative: Guella, Paolo
(86) International application number: PCT/CN2015/074812
(87) International publication number: WO 2015/139667

(57) **Abstract**

The present invention provides a pipetting workstation comprising a pipetting mechanism bracket and a plurality of pipetting mechanisms; wherein, the pipetting mechanism comprises a mobile seat, a mobile rod movably mounted on the mobile seat; a mobile rod drive mechanism; a linear rail fastening seat; and a pipette body disposed at the lower end of the mobile rod. The present invention further provides usage of the pipetting workstation in such aspects as liquid sampling and liquid transferring. Tthe pipetting workstation provided by the present invention can effectively reduce the impact and vibration during the operation, has small noise and running in a stable and reliable manner. The pipetting mechanism of the workstation of the present invention can operate more flexibly and reach more positions of plate.

## Description

### AUTOMATIC PIPETTING WORKSTATION AND THE USEAGE THEREOF

The present application claims priority of the Chinese patent application numbered 201410109314.5 entitled Automatic Pipetting Workstation and the Use Thereof, filed on March 21, 2014. The disclosure of these applications is incorporated by reference in its entirety.

### TECHNICAL FIELD

The present application relates to an automatic liquid handling apparatus. Specifically, the present application relates to a fully automatic pipetting workstation and a pipetting mechanism equipped therein, and usage of the instrument in liquid sampling, transfer or the like.

### BACKGROUND OF THE INVENTION

With rapid development of technologies in the area of life science, research works in biological laboratories are faced with more complicated objects for research and increasing number of samples, consequently, the traditional manual instruments are no longer able to produce high effectivity, precision and safety as required in the process of high through-put sample handling; while, to automate part or the total of the procedure of performing an experiment is now becoming an inevitable trend.

A fully automatic liquid handling workstation refers to automatic operation platform in biological and medical laboratories that is sophisticatedly incorporated automatic operation and liquid handling, and is able to perform such operations as automatic sample dosing, reagent dispensing, ultra-micro liquid pipetting, vibration and incubation relating to liquid handling. It can be widely applied in areas such as purification of nucleic acids, sequencing genetic proteins, rapid screening of clone, well cultivation and manufacturing of biological chips and samples.

A pipetting mechanism is one of the key mechanisms adopted in a fully automatic liquid handling workstation and is provided for transportation, extraction and transferring of liquid between standard liquid containers. As is used in the modern fully automatic liquid handling workstation, the most common standard liquid containers are, for example, 8-well plates or 96-well plates. Wherein, the standard liquid container such as a 96-well plate has the minimum spacing between neighbouring wells of 9mm, with a volume of about 0.5ml, and 8 wells in each row. Accordingly, the automatic liquid handling workstation, particularly the pipetting mechanism, is required to be able to do concurrent or discrete pipetting actions of multiple, for example eight, transfer pipettes with high precision and repeatability in a very confined space.

The automatic liquid handling workstations and the pipetting mechanisms in the prior art suffer from such shortcomings as mechanisms undergo heavy wear and have loud noise, operational movements are not done smoothly, requires very high precision in making sliding slots of the mobile seat, adjustment job during the process of assembly is quite complicated and heavy-loaded; besides, the daily operation and maintenance are cumbersome, and the inside of the instrument is prone to be contaminated and eroded.

### SUMMARY OF THE INVENTION

The present application provides a novel fully automatic workstation that overcomes problems of heavy mechanism wear, complicated assembly and adjustment, and great noise of the entire mechanism suffered by the pipetting mechanisms in the prior art, and also provides an inner setting that is easy to maintain and not prone to cause contamination.

The present invention provides a pipetting workstation that comprises:
(a) a bracket for pipetting mechanisms;
(b) a plurality of pipetting mechanisms; wherein the pipetting mechanism comprises:
   a mobile seat;
   a mobile rod that is movably mounted on the mobile seat; wherein the mobile rod can make movements against the mobile seat in the vertical direction;
   a mobile rod drive mechanism comprising a lead screw that is disposed parallel to the mobile rod and a drive mechanism for the lead screw, wherein the lead screw is securely connected with the mobile rod via a drive connector;
   a seat horizontally-moving mechanism, which comprises a horizontally disposed seat conveyor belt and a belt fastening unit securely connected with the mobile seat (such as the one side of a frame, preferabley the outside of the frame), wherein the mobile seat is connected with the conveyor belt via the belt fastening unit so that the rotation of the conveyor belt drives the horizontal movement of the mobile seat; a linear rail fastening seat fastened onto the mobile seat (such as the one side of a frame of the mobile seat, preferabley the outside of the frame); and
   a pipette body disposed at the lower end of the mobile rod;
   and
(c) a linear rail that is horizontally disposed and is parallel to the rack; a slider of the linear rail is connected and fastened with the linear rail fastening seat of the pipetting mechanism, thereby the mobile seat can make horizontal movements along a track of the linear rail with the slider of the linear rail.

In the abovementioned pipetting mechanism of the pipetting workstation of the present invention, the seat conveyor belt is horizontally disposed and comprises a drive pulley and a idler pulley at each end thereof; being drived via a seat conveyor belt drive motor (preferably, the seat conveyor belt drive motor is a stepping motor), the drive pulley drives the seat conveyor belt to rotate, so as to drive the movement of the seat via the belt fastening unit. Surprisingly, when the pipetting workstation of the present invention using the conveyor belt system as the driving means, even using a stepping motor as the drive motor, the pipetting workstation of the present invention can still effectively reduce the impact and vibration, and has a significantly smaller noise than the pipetting workstation using other driving means (such as a gear and rack pair). In addition, using a stepping motor can greatly reduce the manufacturing cost and simplify the control algorithm.

In the pipetting mechanism of the abovementioned pipetting workstation, the linear rail fastening seat can be connected and fastened the slider of the linear rail. The linear rail can be disposed horizontally and be parallel to the seat conveyor belt. The slider of the linear rail is connected and fastened with the linear rail fastening seat, thereby the linear rail fastening seat and the mobile seat, which is connected and fastened with the linear rail fastening seat, can make horizontal movements with the slider of the linear rail along the track of the linear rail.

In one aspect of the present invention, the seat conveyor belt of the pipetting workstation, the linear rail fastening seat and the linear rail are so positioned that allows driving the mobile seat fastened with the slider of the linear rail to make horizontal movements along the sliding track of the linear rail when the seat conveyor belt rotates. For example, the belt fastening unit and the linear rail fastening seat are arranged on the same side of the frame, and the conveyor belt and the linear rail are arranged parallel with one situating above the other one.

In one aspect of the present invention, the linear rail fastening seat has a quadrangular surface that is same as or similar to the surface of the slider of the linear rail in terms of shape and size. For example, the height of the linear rail fastening seat H1 is greater than 25mm, preferably greater than 30mm. The linear rail that can be compatible or used with the linear rail fastening seat is a linear rail with a slider width W greater than 25mm, preferably greater than 30mm.

In one aspect of the present invention, the linear rail fastening seat in the pipetting mechanism is connected with a fastening area of the mobile seat. Said fastening area is located beneath the belt fastening unit on the side frame of the mobile seat. Said fastening area can be a part of the side frame, or an independent unit which is mounted onto the mobile seat via a screw thread. Typically, the linear rail fastener has a width that is same as or similar to the width of the linear rail fastening seat (which refers to the length in the horizontal direction) and a height greater than twice of that of the linear rail fastening seat (which refers to the length in the vertical direction). For example, the height of the linear rail fastener H2 is greater than or equal to 50mm, preferably greater than or equal to 60mm.

In one aspect of the present invention, the mobile seat of the pipetting mechanism has a quadrangular frame, whose four sides are the upper beam, the lower beam and two side frames, respectively.

In one aspect of the present invention, the mobile rod in the pipetting mechanism of the pipetting workstation is movably mounted at one side frame of the mobile seat.

In one aspect of the present invention, the side frame for mounting the mobile rod in the pipetting mechanism of the pipetting workstation has a hallow groove which opens inward to the mobile seat; the mobile rod is movably disposed in the hallow groove, while part of the mobile rod situates outside the hallow groove, that is, part of the mobile rod sticks out beyond the inner surface of the left side frame. The protruding portion of the mobile rod can be securely connected with the drive connecter of the mobile rod drive mechanism.

In one aspect of the present invention, the mobile rod in the pipetting mechanism of the pipetting workstation is movably mounted on the side frame of the mobile seat by means of a mobile rod sleeve mounted on the side frame. Wherein, the mobile rod sleeve is securely connected with the side frame, and the mobile rod can move within the mobile rod sleeve.

In one aspect of the present invention, the mobile rod sleeve in the pipetting mechanism of the pipetting workstation is a sleeve made of a polymer material. For example, the iglidur® series of products provided by Igus, such as iglidur® G, iglidur® W300, iglidur® J, iglidur® X and iglidur® M250. Since parts made of the abovementioned polymer materials are lubricant-free (self-lubricating) and distinguish themselves through their good resistance against acid and alkane and exwellent vibration dampening, they do not need use of seal or oil scraper rings, so installment and replacement of these parts become quite easy. Preferably, the mobile rod sleeve in the pipetting mechanism provided by the present invention is not a part made of a metallic material.

In one aspect of the present invention, the mobile rod in the pipetting mechanism of the pipetting workstation is a hollow rod. The hollow rod can be used to house layout of wires or pipetting catheters.

In one aspect of the present invention, the drive mechanism for the lead screw comprises a lead screw belt idler pulley which is securely connected with the top of the lead screw, a lead screw belt drive pulley and a lead screw conveyor belt, and a lead screw conveyor belt drive motor connecting with the spindle of the lead screw drive motor. Preferably, the lead screw conveyor belt drive motor is a stepping motor. In a further aspect of the present invention, the lead screw conveyor belt is horizontally disposed and secured on the top of a top plate of the seat, while the lead screw belt idler pulley and the lead screw belt drive pulley are located at each end of the belt; the lead screw belt idler pulley is securely connected with the top of the lead screw and located on the top of the top plate. The lead screw belt drive pulley is securely connected with the spindle of the lead screw drive motor. Said lead screw drive motor can be located beneath the top plate. In one aspect of the present invention, said lead screw drive motor is connected with an encoder, for example, the encoder is installed under the drive motor. The encoder can count the stepping of the drive motor, calculate and control the rotation distance of the lead screw and thus control the moving distance of the mobile rod.

Surprisingly, when the pipetting workstation of the present invention using the conveyor belt system as the driving means for the lead screw, even using a stepping motor as the drive motor, the pipetting workstation of the present invention can still effectively reduce the impact and vibration, and has a significantly smaller noise than the pipetting workstation using other driving means (such as a gear and rack pair). In addition, using a stepping motor can greatly reduce the manufacturing cost and simplify the control algorithm. In one aspect of the present invention, the lead screw is securely connected with the mobile rod via a nut and the drive connector. For example, the nut is threaded onto the lead screw; one end of the drive connector is securely connected with the mobile rod, white the other end of the drive connector is fastened at the outer side of the nut. Preferably, the nut is made of a polymer material. Preferably, the nut is not made of a metal material.

In one aspect of the present invention, the pipette body used in the pipetting mechanism of the pipetting workstation comprises a seat positioner, such as a seat positioner installed onto the side frame of the seat, which works with an optical position sensor to judge and control the horizontal coordinate. The seat positioner is used for resetting function.

In one aspect of the present invention, the pipetting workstation further comprises linear rails that are horizontally disposed and are parallel to the seat conveyor belt. The sliders on the linear rails are connected and fastened with the linear rail fastening seats, so that the mobile seats can make horizontal movements along the tracks of the linear rails with the sliders of the linear rails. In one aspect of the present invention, the mobile seats are connected and fastened with the sliders of the linear rails via the linear rail fastening seats.

In one aspect of the present invention, the seat conveyor belt of the pipetting workstation and the linear rail fastening seat are so positioned that allows driving the mobile seat fastened with the slider of the linear rail to make horizontal movements along the sliding track of the linear rail when the seat conveyor belt moves (rotates). The mobile seats are connected and fastened with the sliders of the linear rails via the linear rail fastening seats. For example, the seat conveyor belt and the linear rail fastening seat are arranged on the same side of the frame, and the conveyor belt and the linear rail are arranged parallel with one situating above the other one.

In one aspect of the present invention, the pipette body in the pipetting mechanism comprises a stopper, a pipetting holder, a duct connected below the pipetting holder, and the duct can be connected with a replaceable pipetting tip. In another aspect of the present invention, a detachable sleeve is mounted on the duct in the pipetting mechanism. In another aspect of the present invention, the pipetting tip is equipped with a liquid level sensor. The liquid level sensor can be disposed below the pipetting holder.

In one aspect of the present invention, the pipetting workstation comprises a plurality of (e.g., four or eight) of the abovementioned pipetting mechanisms, wherein two or more of the plurality of the pipetting mechanisms are arranged side by side; the mobile rods of the two or more of the plurality of the pipetting mechanisms that are arranged side by side lay out on the same line, and the seat conveyor belts of these two or more of the plurality of the pipetting mechanisms are disposed vertically parallel to each other, preferably within the same plane. In another aspect of the present invention, the linear rail fastening seats of the mobile seats of the two internal pipetting mechanisms in the two or more pipetting mechanisms that are arranged side by side are connected with two sliders of the same linear rail. For example, the two mobile seats in the plurality of the pipetting mechanisms that are arranged side by side can be discretely connected with the two sliders of the same linear rail by means of discretely fastening the linear rail fastening seats of the two neighbouring mobile seats either on the upper part or the lower part of the linear rail fastener of the mobile seats. The conveyor belts, the linear rail fastening seat and the linear rail are so positioned that allows driving the mobile seat, which is fastened to the linear rail, to make horizontal movements along the direction of the track of the linear rail at the time when the conveyor belts rotate.

In one aspect of the present invention, the pipetting workstation comprises four or eight pipetting mechanisms. In a pipetting workstation comprising eight pipetting mechanisms, the eight pipetting mechanisms are arranged into two parallel groups, wherein four pipetting mechanisms in each group are arranged side by side, and the seat conveyor belts of the four pipetting mechanisms in each group are disposed vertically parallel to each other, preferably within the same plane. In another aspect of the present invention, the linear rail fastening seats of the mobile seats in two of the four pipetting mechanisms in each group are discretely connected with the two sliders of the same linear rail. For example, the two mobile seats in the four pipetting mechanisms that are arranged side by side in each group can be discretely connected with the two sliders of the same linear rail through fastening discretely the linear rail fastening seats of the two neighbouring mobile seats on either the upper part or the lower part of the linear rail fastener of the mobile seat. The seat conveyor belts, the linear rail fastening seats and the linear rails are so positioned that allows driving the mobile seats, which is fastened to the linear rails, to make horizontal movements along the direction of and the track of the linear rails at the time when the conveyor belts rotate. In the pipetting workstation provided by the present invention, the mobile rods of the four pipetting mechanisms in each group lay out on the same line and are arranged staggered with the four pipetting mechanism in the other group, so that the pipetting tips of the eight pipetting mechanisms can lay out on the same line.

In one aspect of the present invention, the pipetting workstation further comprises other detection means or containers, for example, an injection pump, a heating panel, an oscillator, an photometer, a PCR instrument, a gripper mechanism and containers for placing a sample or reagent such as Eppendorf, a centrifuge tube, a PCR microplate, a deep well plate, a micro flow filter, a holder or the like.

In one aspect of the present invention, a pipetting mechanism as stated above is further provided. In one aspect of the present invention, a multichannel pipetting apparatus using the pipetting mechanism is further provided. The multichannel pipetting apparatus is equipped with two, four or eight of the pipetting mechanisms.

The pipetting mechanism, apparatus and instrument provided by the present invention allows each pipetting mechanism to totally independently make longitudinal or horizontal movements, the overall layout of their structure is more reasonable, and the space for accommodating movement is much clearer, while difficulty and complexity experienced in adjustment job during the process of assembly are greatly reduced. Additionally, a self-lubricating maintenance-free polymer material is employed to prepare the sleeve that fastens the mobile rod and accommodates sliding movement of the mobile rod inside so the hollow square tubes can make smooth and gentle movement quietly within the sleeve made of a polymer material; this also makes it unnecessary to lubricate the sleeve or reduces lubricating service to the sleeve, which accordingly avoid the potential of contamination arising from oil lubricant used to the pipetting operation. Especially, when the pipetting mechanism, apparatus and workstation of the present invention using the conveyor belt system as the driving means for the lead screw or the mobile seat, even using a stepping motor as the drive motor, the pipetting workstation of the present invention can still effectively reduce the impact and vibration, and has a significantly smaller noise than the pipetting workstation using other driving means (such as a gear and rack pair). In addition, using a stepping motor can greatly reduce the manufacturing cost and simplify the control algorithm. The pipetting mechanism, apparatus and workstation of the present invention have a compacter structure, so that the pipetting arms can operate more flexibly and reach more positions of plate. Surprisingly, the design, structure and applications of the pipetting mechanism, apparatus and workstation of the present invention enable the transmission efficacy of the conveyor belt system to be as high as 98%, Furthermore, in the screw pair employed in the pipetting mechanism of the present invention for enabling the pipetting tip to make vertical movement, the lead screw is driven by a server motor; and this overcomes shortcomings of huge mechanical vibration and instability suffered in the prior art. Besides, a clearance elimination structure is employed in the nut, which can eliminate most mechanical gap in the movement of the nut and lead screw and accordingly can further allow transmission with better precision, thereby enabling the pipetting tips to perform more sophisticated operation of pipetting. Wherein, the screw nut also can be made of a polymer material, accordingly, the mechanism for drive the pipetting tips to make vertical movements needs no or less lubricating service, which accordingly avoids the potential of condemnation arising from oil lubricant to pipetting operation.

### BRIEF DESCRIPTION OF THE DRAWINGS

FIG. 1 illustrates part from a first direction of the layout inside the pipetting workstation provided in a preferred embodiment of the present invention.
FIG. 2 illustrates part from a second direction of the layout inside the pipetting workstation provided in a preferred embodiment of the present invention.
FIG. 3 illustrates a 3D view of the pipetting mechanism in the pipetting workstation provided in a preferred embodiment of the present invention.
FIG. 4 illustrates part of installation diagram of the pipetting mechanism in the pipetting workstation provided in a preferred embodiment of the present invention.

### Reference signs for the appended drawings

1 Mobile seat
2 Square tube sleeve
   201 projection on the square tube sleeve
4 Lead screw
6 Nut
7 Mobile rod
9 Lead screw conveyor belt drive motor
10 Lead screw belt drive pulley
11 Lead screw belt idler pulley
12 Lead screw conveyor belt
13 Mobile rod drive motor
17 Drive connecter
18 Top plate
19 Bottom plate
21 Upper beam
22 Lower beam
23Left side frame
   231 Groove on the left side frame
24 Right side frame
25 Pipetting holder
26 Duct
28 Detachable sleeve
30 Pipetting tip
31 Stopper
33 Motor box
34 Linear rail fastening seat
35 Linear rail fastening area
36 Encoder
37 Side plate
38 Back plate
40 Linear rail
41 Linear rail sliding track
42 Linear rail slider
43 Belt fastening unit
44 Seat conveyor belt
45 Seat conveyor belt drive motor
46 Seat belt drive pulley
47 Seat belt idler pulley
48 Seat positioner

### DETAILED DESCRIPTION OF THE INVENTION

Here below, the present invention is to be described at length in conjunction with the appended drawings for a better understanding and description of the present invention.

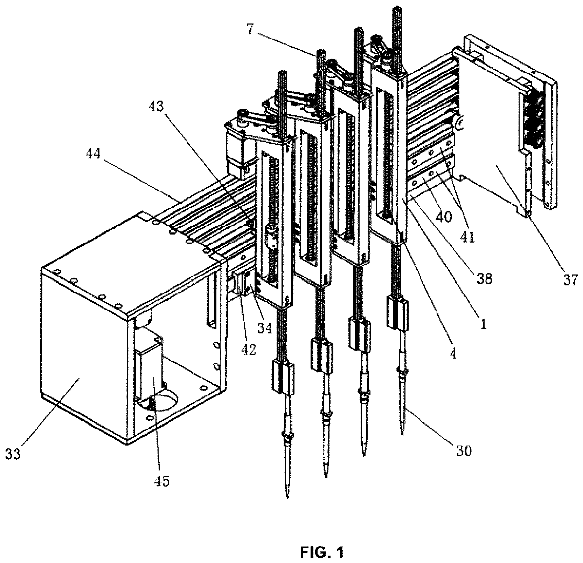

FIG. 1 illustrates part from a first direction of the layout inside the pipetting workstation provided in a preferred embodiment of the present invention.

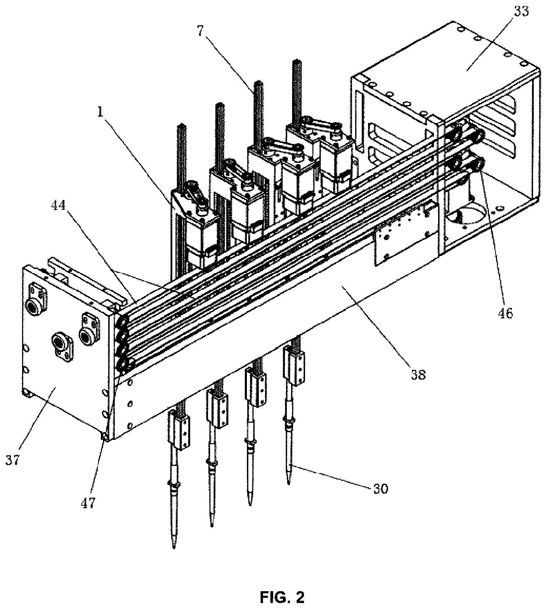

FIG. 2 illustrates part from a second direction of the layout inside the pipetting workstation provided in a preferred embodiment of the present invention.

The pipetting workstation provided by the present invention normally comprises eight pipetting mechanisms employed for liquid sampling and transfer. The eight pipetting mechanisms are arranged into two parallel groups, wherein four pipetting mechanisms in each group are arranged side by side. FIG. 1 shows the diagram of part of means inside the pipetting workstation provided by the present invention, which comprises a means that comprising one group of said two groups of four pipetting mechanisms. The pipetting mechanism comprises a mobile seat 1 having a quadrangular frame. The pipetting mechanism further comprises a mobile rod 7 that can be movably mounted vertically on one side of the frame of the mobile seat, and a pipetting body disposed at the lower end of the mobile rod. The mobile rod can make upward and downward movements against the mobile seat within the frame in the vertical direction. The pipette body is a mechanism for performing functions of liquid sensing, transferring and drawing in liquid; the pipette can make upward and downward movements with upward and downward movements of the mobile rod and allow handling of liquid sample in a container placed below the pipette.

The pipetting mechanism is further equipped with a seat horizontally-moving mechanism, which comprises a horizontally disposed seat conveyor belt 44 and a belt fastening unit 43 securely connected with the outside of the frame of the mobile seat 1, wherein the mobile seat is connected with the conveyor belt via the belt fastening unit so that the rotation of the conveyor belt drives the horizontal movement of the mobile seat. The pipetting mechanism further comprises a linear rail fastening seat 34, which is fastened onto the mobile seat, for connecting and fastening with a slider of the linear rail, thereby the mobile seat can slide along a linear rail, which is horizontally disposed, to make horizontal movements.

In the pipetting workstation provided by the present invention, the mobile rods of the four pipetting mechanisms in each group lay out on the same line and are arranged in a staggered manner with the mobile rods of the four pipetting mechanisms in the other group, so that the pipetting tips of the eight pipetting mechanisms can lay out on the same line.

As shown in the preferred embodiment, for the four pipetting mechanisms in each group of the pipetting workstation, the mobile seats 34 of two interval pipetting mechanisms among the two or more pipetting mechanisms that are installed side by side are connected with the two sliders of the same linear rail. As such, the four pipetting mechanisms in each group are connected with two linear rails. The two pipetting mechanisms whose mobile seats are connected with the two sliders of the same linear rail are separated by another pipetting mechanism. The seat conveyor belts 44 of the four pipetting mechanisms in each group are disposed vertically parallel to each other.

The pipetting workstation provided by the present invention can further comprise a housing (not shown) and a bracket for holding the aforesaid pipetting mechanisms. The bracket can comprise posts, a transverse beam and a backplane for holding and/or mounting the pipetting mechanisms. As shown in FIG. 2, the two rails 41 of the two linear rails are arranged parallel with one situating above the other, and are securely fastened onto the back plate 38. The back plate 38 can be securely fastened on a side plate 37 of the housing or onto the transverse beam mounted inside the housing. The bracket further comprises a motor box 33 for holding seat conveyor belt drive motors 45.

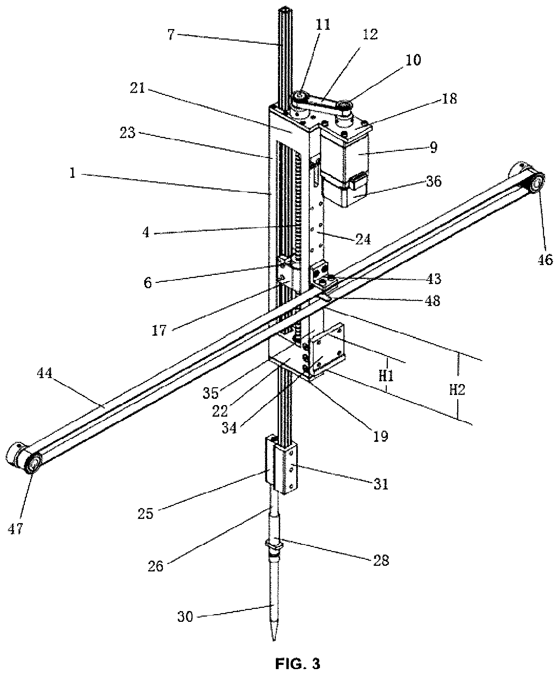

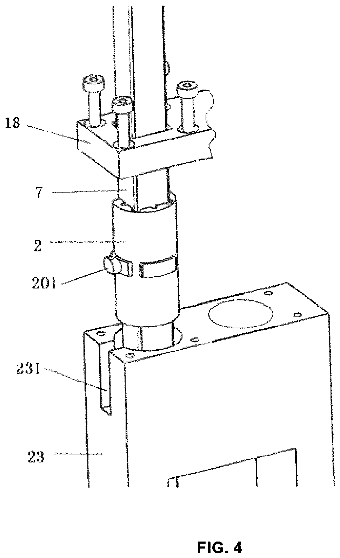

FIG. 3 illustrates a 3D view of the pipetting mechanism in the pipetting workstation provided in a preferred embodiment of the present invention. FIG. 4 illustrates part of installation diagram of the pipetting mechanism in the pipetting workstation provided in a preferred embodiment of the present invention.

As shown in FIG. 3, the pipetting mechanism has a mobile seat 1 that comprises a quadrangular frame; the pipetting mechanism further comprises a mobile rod that is movably mounted in a vertical direction onto one side frame (such as the left side frame 23 as shown) of the mobile seat and pipetting body disposed at the lower end of the mobile rod. The mobile rod can make upward and downward movements in the vertical direction against the mobile seat within the frame, and the pipetting body is provided for performing functions of sensing, transferring and drawing in liquid, and it can make upward and downward movements along with upward and downward movements of the mobile rod, which accordingly allows handling of liquid sample in a container placed below the pipetting tip. The pipetting mechanism further comprises a drive mechanism for driving the mobile rod to make upward and downward movements against the mobile seat, and it comprises a lead screw 4 which is mounted onto the mobile seat and parallel to the mobile rod and a driving equipment for the lead screw. The lead screw is securely connected with the mobile rod via a drive connector 17. The pipetting mechanism further comprises seat horizontally-moving mechanism, which comprises a horizontally disposed seat conveyor belt 44 and a belt fastening unit 43 securely connected with the outside of a side frame of the mobile seat 1, wherein the mobile seat is connected with the conveyor belt via the belt fastening unit so that the rotation of the conveyor belt drives the horizontal movement of the mobile seat. The pipetting mechanism also comprises a linear rail fastening seat 34 fastened onto the mobile seat, which is for the use of connecting with the a slider of the linear rail, so that the mobile seat can make horizontal movements along a track 41 of the linear rail with the slider of the linear rail.

In the pipetting mechanism provided in the preferred embodiment as shown in FIG. 3, the mobile seat is a rectangular element with a quadrangular frame whose four sides are respectively the upper beam 21, the lower beam 22, the left side frame 23 and the right side frame 24. The mobile seat normally can be made of a metallic material such as aluminum or stainless steel that is capable of reducing equipment weight and lessening liquid traction. The frame has a thickness to a certain extent that can provides support to the motor and means for accommodating devices such as circuit board housing for a controlling motor, and also can accommodate and hold the mobile rod. For example, the frame can have a thickness similar to that of the width of the motor (e.g., the diameter of a cylindrical motor or the width of a rectangular motor) or have a thickness greater than the width of the mobile rod (e.g., the diameter of a cylindrical mobile rod or the width of a rectangular mobile rod). In one aspect of the present invention, the frame has a thickness greater than 0.5cm. The use of a frame has the advantage of reducing component weight. In other embodiments, the mobile seat alternatively can be a rectangular element with no hollow part. In this case, parts of the four sides are equivalent to the abovementioned quadrangular frame, namely, 'the upper beam, the lower beam, the left side frame and the right side frame'.

In the preferred embodiment as shown, the left side frame 23 is provided for mounting the mobile rod 7 that makes upward and downward movements against the mobile seat within the frame. In the preferred embodiment as shown, the left side frame 23 comprises a groove which opens inward to the mobile seat (i.e., open towards the right side frame); the mobile rod is movably mounted in the groove, whilst part of the mobile rod sticks out beyond the groove, namely, beyond the inner surface of the left side frame. The protruding part of the mobile rod can be employed to establish a secure connection with the drive mechanism that is provided for drive the mobile rod to make upward and downward movements.

As shown in FIG 3, the drive mechanism for driving the mobile rod to make upward and downward movements against the mobile seat inside the left side frame comprises a lead screw 4 and a driving equipment for the lead screw. The drive mechanism for the lead screw comprises a lead screw belt idler pulley 11 which is securely connected with the top of the lead screw, a lead screw belt drive pulley 10 and a lead screw conveyor belt 12, and a lead screw conveyor belt drive motor 9 connecting with the spindle of the lead screw drive motor. Preferably, the lead screw conveyor belt drive motor 9 is a stepping motor. In a further aspect of the present invention, the lead screw conveyor belt is horizontally disposed and secured on the top of a top plate18 of the seat, while the lead screw belt idler pulley and the lead screw belt drive pulley are located at each end of the belt; the lead screw belt idler pulley is securely connected with the top of the lead screw and located on the top of the top plate. The lead screw belt drive pulley is securely connected with the spindle of the lead screw drive motor. Said lead screw drive motor can be located beneath the top plate. In one aspect of the present invention, said lead screw drive motor is connected with an encoder, for example, the encoder 36 is installed under the drive motor. The encoder can count the stepping of the drive motor, calculate and control the rotation distance of the lead screw and thus control the moving distance of the mobile rod. The upper and lower ends of the lead screw are limited between the upper beam 21 and lower beam 22 of the mobile seat. In the preferred embodiment as shown, the upper beam of the mobile seat has a top plate 18. The lead screw belt idler pulley 11 and the lead screw belt drive pulley 12 and the lead screw conveyor belt 12 are disposed on the top of the top plate 18. The top plate can have a length and a width same as or similar to those of the upper beam. The ceiling panel alternatively can have a length greater than that of the upper beam, and can be provided for accommodation and arrangement of means such as circuit board housing for a controlling motor or the like. Such a design allows saving significant inner space of an automatic pipetting instrument using the pipetting mechanism provided by the present invention, which accordingly facilitates layout of wires and pipetting catheters.

The lead screw 4 is securely connected with the mobile rod 7 via a nut 6 and a drive connector 17. Wherein, the nut 6 is threaded onto the lead screw; one end of the drive connector 17 is securely connected with the mobile rod by means of screws or the like, while the other end thereof can be secured at the outer side of the nut 6 through threading. When the lead screw starts turning when it is driven by the drive mechanism, the drive connector 17 can make upward and downward movements within the space between the upper beam and the lower beam of the mobile seat, thereby drive the mobile rod to make upward and downward movements. In one aspect of the present invention, a gap clearance structure can be adopted in the nut, which can eliminate most mechanical gap arising from movements between the nut and the lead screw. In one aspect of the present invention, the nut is made of a polymer material, for example, the iglidur® series of products provided by Igus, such as iglidur® G, iglidur® W300, iglidur® J, iglidur® X and iglidur® M250. Since parts made of the abovementioned polymer materials are lubricant-free (self-lubricating) and distinguish themselves through their good resistance against acid and alkane, and exwellent vibration dampening, they do not need use of seal or oil scraper rings, so installment and replacement of these parts are quite easy.

The mobile rod of the pipetting mechanism provided by the present invention, which is movable in the vertical direction (namely the direction parallel to the frame), is fastened onto the mobile seat. Preferably, the mobile rod is movably fastened in a frame of the mobile seat. For example, the mobile rod can be mounted in the frame of the mobile seat through mobile rod sleeves mounted onto the upper end and the lower end of the frame, wherein the mobile rod sleeves are securely connected with the frame, and the mobile rod can move within the mobile rod sleeve. In the embodiment as shown, the mobile rod is the square rod 7, which is movably fastened with the left frame 23 at the upper end and the lower end of the mobile seat through square rod sleeves 2. FIG. 3 illustrates how the square rod 7, the square rod sleeves 2 and the left frame 23 are connected. As shown in FIG. 3, the square rod sleeve is secured inside (e.g. through fitting of an projection 201 on the square rod sleeve into the groove 231 disposed at the left frame) one end of the left frame 23 (e.g., the upper end as shown, while the lower end also has the same structure), thereby the square rod 7 can slideably fit in the square rod sleeve 2. In one aspect of the present invention, the square rod sleeve is made of a self-lubricating polymer material, for example, the iglidur® series of products provided by Igus, such as iglidur® G, iglidur® W300, iglidur® J, iglidur® X and iglidur® M250. These polymer materials distinguish themselves through their good resistance against acid and alkane and exwellent vibration dampening, they do not need use of seal or oil scraper rings, so installment and replacement of these parts are quite easy.

In the embodiment as shown, the mobile rod is a hollow square rod 7. The mobile rod made of a hollow duct can be employed to install wires or pipetting catheters. For example, it can be employed for housing layout, including catheters connected with tubes for transferring and extracting liquid and wires for various elements and mechanisms, such as cords of the liquid level sensor and cords of the motors. A wiring duct connector can be disposed at the top of the square rod 7.

The pipetting mechanism provided by the present invention further comprises a belt fastening unit 43 securely connected with the mobile seat (such as securely connected with the inside or outside of the frame of the mobile seat). In the diagramed example, the belt fastening unit is securely connected with the outside of the side frame of the mobile seat which is not the side frame housing the mobile rod. The mobile seat is connected with the conveyor belt via the belt fastening unit so that the rotation of the conveyor belt 44 drives the horizontal movement of the mobile seat. The rotation of the seat conveyor belt is drived by the seat belt drive pulley 46, whose rotation is drived by the seat conveyor belt drive motor 45.

The pipetting mechanism provided by the present invention further comprises a linear rail fastening seat 34, which is fastened onto the mobile seat and is provided for establishing fastening with a slider of the linear rail. In one aspect of the present invention, the linear rail fastening seat 34 is fastened outside the frame of the mobile seat (e.g., the right frame 24 as shown). The linear rail fastening seat has a square surface with a size same as or similar to that of the surface of the slider of the linear rail. In one aspect of the present invention, the height of the linear rail fastening seat H1 is not smaller than 25mm, preferably not smaller than 30mm. Linear rails that can fit with or be used in the pipetting mechanism or the full automatic pipetting instrument equipped with the pipetting mechanism provided by the present invention are linear rails with a slider width w (i.e. the length of a slider of a linear rail in the direction perpendicular to a sliding rack of the linear rail) not smaller than 25mm, preferably not smaller than 30mm. The use of a linear rail with aforementioned slider width and/or a linear rail fastening seat with aforesaid height unexpectedly improves stability to a great extent for operating the pipetting mechanism provided by the present invention. The linear rail fastening seat and the slider of the linear rail used in the pipetting mechanism provided by the present invention can be fastened by means of screws or the like, so that the mobile seat can slide along the linear rail. In the pipetting mechanism or the fully automatic pipetting instrument equipped with the pipetting mechanism provided by the present invention, the linear rail is horizontally disposed so that the mobile seat can make horizontal movements along the direction of the linear rail.

In one aspect of the present invention, the pipetting mechanism provided by the present invention is equipped with a linear rail fastening area 35 on the frame of the seat, and the linear rail fastening seat 34 can be connected with the mobile seat through being fastened onto the mobile rail area. Said fastening area is located beneath the belt fastening unit on the side frame of the mobile seat. Said fastening area can be a part of the side frame, or an independent unit which is mounted onto the mobile seat via a screw thread. In one embodiment of the present invention, the linear rail fastening area can be a part of the frame. In one aspect of the present invention, the height of the linear rail fastening area is greater than or equal to twice of the height H2 of the linear rail fastening seat. Preferably, the height of the linear rail fastening area is not smaller than 50mm, preferably not smaller than 60mm. The linear rail fastening seat 34 can be fastened either at the upper part or the lower part of the linear rail fastening area 35.

In the pipetting mechanism provided in the preferred embodiment of the present invention, for example, in the preferred embodiment as shown, the belt fastening unit 43 and the linear rail fastening seat 34 are disposed at the same side outside one frame of the mobile seat, namely outside the right frame as shown. As shown in the figures, the seat conveyor belts 44 is disposed parallel to the linear rail 40 connected with the linear rail fastening seat 34. The belt fastening unit 43 and the linear rail fastening seat 34 are so positioned that the mobile seat, which is fastened with the slider of the linear rail, is driven to make horizontal movements along the direction of the sliding track of the linear rail when the seat conveyor belt 44 rotates. Preferably, the belt fastening unit 43 and the linear rail fastening seat 34 are disposed on the same side of the frame, while the corresponding seat conveyor belt 44 and the linear rail 40 are arranged parallel with one situating above the other. Accordingly, such a design allows saving significant inner space of an automatic pipetting instrument using the pipetting mechanism provided by the present invention. In other embodiments, the seat conveyor belt 44 and the linear rail fastening seat 34 can alternatively be disposed at any other position as appropriate on the mobile seat that enables to drive the mobile seat, which is fastened with the slider of the linear rail, to make horizontal movements along the direction of the sliding track of the linear rail.

In one aspect of the present invention, the pipette body used in the pipetting mechanism of the pipetting workstation comprises a seat positioner, such as a seat positioner 48 installed onto the side frame of the seat, which works with an optical position sensor to judge and control the horizontal coordinate. The seat positioner is used for resetting function.

The pipetting mechanism provided in a preferred embodiment of the present invention further comprises a pipette mounted at the lower end of the mobile rod 7. The pipette is a mechanism for performing functions of detecting and drawing in liquid and comprises elements for performing the abovementioned functions. In an embodiment as shown, the pipette comprises a pipetting holder 27, a detachable sleeve 28, a duct 26, a stopper 31, a pipetting tip 30 and a liquid level sensor 25. Wherein, the pipetting holder 27 is provided for mounting the liquid level sensor 25 and the duct 26, while the catheter is provided for joining the pipetting tip 30 and the stopper 31. The detachable sleeve 28 allows separation of the pipetting tip from the catheter so as to realize the purpose of automatic replacement. Because the pipetting tip is tightly connected with the catheter, so the detachable sleeve needs to allow separating the pipetting tip from the duct within a very small range of distance. However, the design of the pipetting tip of the pipetting mechanism provided by the present invention allows the detachable sleeve to fulfill such a purpose. The liquid level sensor can be employed to detect the distance between liquid contained in a standard liquid container (e.g., a 8-well plate or a 96-well plate), which is placed under the pipetting tip, and the pipetting tip, and to feed signals to the automatic workstation and, when it is necessary, to feed signals to an instrument operating the pipetting mechanism under control of a program.

The fully automatic pipetting workstation provided by the present invention can be equipped with four or eight pipetting mechanisms as described above. The four or eight pipetting mechanisms can either individually make horizontal or longitudinal movements, or concurrently make horizontal or longitudinal movements. Besides, the two neighboring pipetting mechanisms experience the same change to horizontal translation, which allows the neighboring pipetting tips to experience the same change to horizontal translation.

The fully automatic pipetting workstation provided by the present invention is normally equipped with four or eight pipetting mechanism. The eight pipetting mechanisms are arranged in two parallel groups, wherein four pipetting mechanisms in each group are installed side by side. The mobile rods of the four pipetting mechanisms in each group lay out on the same line; the linear rail fastening seats 34 on the mobile seats of two neighboring pipetting mechanism are discretely fastened on either the upper part or the lower part of the linear rail fastening area 35, so that the mobile seats of two among the four pipetting mechanisms in each group can discretely be connected with the two sliders of the same linear rail (through the linear rail fastening seat and the liner rail stoppers). Such a design allows saving significant inner space of an automatic pipetting instrument using the pipetting mechanism provided by the present invention. In the pipetting workstation provided by the present invention, the mobile rods of the four pipetting mechanisms in each group lay out on the same line and are arranged in a staggered manner with the mobile rods of the four pipetting mechanisms in the other group, so that the pipetting tips of the eight pipetting mechanisms can lay out on the same line.

A multichannel pipetting apparatus fabricated with 8 pipetting mechanisms as described above can easily cope with standard liquid containers such as 8-well plates, 24-well plates and 96-well plates. Each pipetting mechanism in the apparatus can independently make upward and downward movements.

The pipetting workstation provided by the present invention can be applied in such operations as sensing, detecting, drawing and ejecting liquid, thereby allows liquid transferring operations.

The present invention further provides use of the pipetting mechanism, the multichannel pipetting apparatus or the fully automatic pipetting workstation for sensing, detecting, suctioning and ejecting liquid thereby allowing liquid transfer.

In practice, the entire operation procedure of the pipetting workstation provided in the preferred embodiment of the present invention is as follows:

where a liquid contained in a standard liquid container (e.g., a 8-well plate or a 96-well plate) needs to be drawn in or ejected, the pipetting mechanism is moved to stay above the standard liquid container. The liquid level sensor detects the distance between the pipetting tip and the liquid in the standard liquid container under the pipette, and feed signals to the controlling system. The lead screw can be driven to rotate by the lead screw conveyor belt drive motor via lead screw belt drive pulley 10, lead screw belt idler pulley 11 and the lead screw conveyor belt 12. The lead screw enables the mobile rod 7 to make longitudinally up and down movements within a longitudinal hole on the left frame of the mobile seat, and this accordingly enables the pipette to make upward and downward movements. When it is necessary for the mobile seat to make movements in the horizontal direction, the seat conveyor belt drive motor 45 drives the conveyor belts to rotate on the horizontal plane, and this accordingly drives the mobile seat to make horizontal movements along the linear rail through establishing connection with the slider of the linear rail.

The pipetting workstation of the present invention can effectively reduce the impact and vibration during the operation, and has a significantly smaller noise than the pipetting workstation using other driving means (such as a gear and rack pair). In addition, using a stepping motor can greatly reduce the manufacturing cost and simplify the control algorithm. The pipetting mechanism, apparatus and workstation of the present invention have a compacter structure, so that the pipetting arms can operate more flexibly and reach more positions of plate. The design of the pipetting mechanism provided by the present invention allows each of the pipetting mechanism equipped in the pipetting workstation to fully independently make longitudinal or horizontal movements, as there is no connection between the pipetting mechanisms. The overall structural layout is more reasonable, and the space for accommodating movement becomes much clearer, while difficulty and complexity suffered in adjustment job during the process of assembly are greatly reduced. When it comes to maintenance of the pipetting mechanism, it only requires fixing or replacing a damaged pipetting channel, while other channels are left intact.

As parts in the mechanism for controlling movements of the pipette in the pipetting workstation provided by the present invention are made of a self-lubricating maintenance-free polymer material, this makes it unnecessary to lubricate the parts or reduces lubricating service to the parts, which accordingly avoid the potential of contamination arising from oil lubricant to the pipetting operation.

Although the exemplary embodiments and their advantages have been described at length herein, it should be understood that various alternations, substitutions and modifications may be made to the embodiments without departing from the spirit of the present invention and the scope as defined by the appended claims. As for other examples, it may be easily appreciated by a person of ordinary skill in the art that the order of the process steps may be changed without departing from the scope of the present invention.

In addition, the scope, to which the present invention is applied, is not limited to the process, mechanism, manufacture, material composition, means, methods and steps described in the specific embodiments in the specification. According to the disclosure of the present invention, a person of ordinary skill in the art should readily appreciate from the disclosure of the present invention that the process, mechanism, manufacture, material composition, means, methods and steps currently existing or to be developed in future, which perform substantially the same functions or achieve substantially the same as that in the corresponding embodiments described in the present invention, may be applied according to the present invention. Therefore, it is intended that the scope of the appended claims of the present invention includes these process, mechanism, manufacture, material composition, means, methods or steps.

## Claims

1. A pipetting workstation comprising:
(a) a pipetting mechanism bracket;
(b) a plurality of pipetting mechanisms, wherein the pipetting mechanism comprises:
a mobile seat (1);
a mobile rod (7) movably mounted onto the mobile seat (1), wherein the mobile rod can make movements along the vertical direction against the mobile seat; preferably, the mobile rod is a hollow rod;
a mobile rod drive mechanism comprising a lead screw (4) that is disposed parallel to the mobile rod (7) and a drive mechanism for the lead screw, wherein the lead screw (4) is securely connected with the mobile rod (7) via a drive connector (17);
a seat horizontally-moving mechanism, which comprises a horizontally disposed seat conveyor belt (44) and a belt fastening unit (43) securely connected with the mobile seat (1), wherein the mobile seat is connected with the conveyor belt via the belt fastening unit so that the rotation of the conveyor belt drives the horizontal movement of the mobile seat;
a linear rail fastening seat (34) fastened onto the mobile seat (1); and
a pipette body disposed at the lower end of the mobile rod (7);
and
(c) a horizontally disposed linear rail that is parallel to the seat conveyor belt; a slider of the linear rail is connected with the linear rail fastening seat (34) of the pipetting mechanism, so that the mobile seat can make horizontal movements along a track of the linear rail with the slider of the linear rail;
preferably, the mobile seat has a quadrangular frame, and the mobile rod (7) is movably mounted at one side frame of the mobile seat (1),
for example, the side frame for accommodating the mobile rod (7) has a groove, which opens inward to the mobile seat; the mobile rod is movably mounted in the groove, whilst part of the mobile rod sticks out beyond the groove, namely, protrudes beyond the inner surface of the frame; the protruding part of the mobile rod can be employed to establish a secure connection with the drive connector (17) of the drive mechanism for the mobile rod.

2. The pipetting workstation of claim 1, wherein the mobile rod is mounted in the side frame of the mobile seat via a mobile rod sleeve disposed inside the side frame, wherein the mobile rod sleeve is securely connected with the side frame, and the mobile rod can move in the mobile rod sleeve, preferably, the mobile rod sleeve is a sleeve made of a polymer material.

3. The pipetting workstation of claim 1, wherein the seat conveyor belt is horizontally disposed and comprises a drive pulley and a idler pulley at each end thereof; being drived via a seat conveyor belt drive motor, the drive pulley drives the seat conveyor belt to rotate, so as to drive the movement of the seat via the belt fastening unit, preferably, the seat conveyor belt drive motor is a stepping motor.

4. The pipetting workstation of claim 1, wherein the drive mechanism for the lead screw comprises a lead screw belt idler pulley (11) which is securely connected with the top of the lead screw, a lead screw belt drive pulley (10) and a lead screw conveyor belt (12), and a lead screw conveyor belt drive motor (9), preferably, the lead screw conveyor belt drive motor is a stepping motor.

5. The pipetting workstation of claim 1, wherein the lead screw conveyor belt (12) is horizontally disposed and secured on the top of a top plate of the seat, while the lead screw belt idler pulley and the lead screw belt drive pulley are located at each end of the belt; the lead screw belt idler pulley is securely connected with the top of the lead screw and located on the top of the top plate; the lead screw belt drive pulley is securely connected with the spindle of the lead screw drive motor and located beneath the top plate.

6. The pipetting workstation of claim 1, wherein the lead screw (4) is securely connected with the mobile rod (7) via a nut (6) and the drive connector (17); wherein the nut is threaded onto the lead screw; one end of the drive connector (17) is securely connected with the mobile rod (7), while the other end of the drive connector (17) is fastened at the outer side of the nut (6), preferably, the nut is made of a polymer material.

7. The pipetting workstation of claim 1, wherein the linear rail fastening seat (34) is connected with a linear rail fasten area (35) of the mobile seat,
preferably, the height of the linear rail fastening seat (34) H1 is greater than 25mm, more preferably greater than 30mm,
more preferably, the height of the linear rail fastening area (35) H2 is greater than or equal to 50mm, more preferably greater than 60mm.

8. The pipetting workstation of any one of claims 1-7, wherein two or more of the plurality of pipetting mechanisms are installed side by side; the two or more of the plurality of pipetting mechanisms lay out on the same line, and the seat conveyor belts (44) of the two or more of the plurality of pipetting mechanisms are disposed vertically parallel to each other.

9. The pipetting workstation of claim 8, wherein the mobile seats (34) of two interval pipetting mechanisms among the two or more pipetting mechanisms that are installed side by side are connected with the two sliders of the same linear rail; the two pipetting mechanisms whose mobile seats (34) are connected with the two sliders of the same linear rail are separated by another pipetting mechanism among the two or more pipetting mechanisms that are installed side by side;
preferably, the linear rail fastening seats (34) on the mobile seats of two neighboring pipetting mechanisms among the two or more pipetting mechanisms that are installed side by side are fastened onto either the upper part or the lower part of their own linear rail fastening area (35).

10. The pipetting workstation of any one of claims 1-9 comprising four or eight of the pipetting mechanisms;
for example, the pipetting workstation comprises eight of the pipetting mechanisms, wherein the eight pipetting mechanisms are arranged in two groups disposed parallel to each other; four pipetting mechanisms in each group are installed side by side; the seat conveyor belts of the four pipetting mechanisms in each group are disposed vertically parallel to each other; and the linear rail fastening seats of the mobile seats of every two interval pipetting mechanisms among the four pipetting mechanisms in each group are connected with the two sliders of the same linear rail.

11. The pipetting workstation of claim 10, wherein the linear rail fastening seats (34) on the mobile seats of two neighboring pipetting mechanisms are fastened onto either the upper part or the lower part of the linear rail fastening area (35).

12. The pipetting workstation of claim 10 or 11, wherein the mobile rods of the four pipetting mechanisms in each group lay out on the same line and are arranged in a staggered manner with the mobile rods of the four pipetting mechanisms in the other group, so that the pipetting tips of the eight pipetting mechanisms can lay out on the same line.
